# EUROPÄISCHE PATENTSCHRIFT

(11) **EP 0 548 630 B1**
(45) Veröffentlichungstag und Bekanntmachung des Hinweises auf die Patenterteilung: **02.05.1997**
(21) Anmeldenummer: 92120729.6
(22) Anmeldetag: 04.12.1992
(51) Int. Cl.: F23G 7/06, B01D 53/00

(54) **Vorrichtung zum Reinigen schadstoffhaltiger Abluft o. dgl. aus Industrieanlagen durch regenerative Nachverbrennung**
Apparatus for cleaning noxious exhaust air from industrial installations by regenerative after burning
Dispositif d'épuration d'air d'échappement nocif des installations industrielles par post-combustion régénératrice

(30) Priorität: 20.12.1991 DE 4142136
(43) Veröffentlichungstag der Anmeldung: 30.06.1993
(73) Patentinhaber: EISENMANN MASCHINENBAU KG (Komplementär: EISENMANN-Stiftung), D-71002 Böblingen (DE)
(72) Erfinder: Wilhelm, Friedrich, Dr., W-7031 Gärtringen (DE)
(74) Vertreter: Seemann, Norbert W., Dipl.-Ing.

(56) Entgegenhaltungen:
- EP-A- 0 440 181
- DE-A- 2 951 525
- US-A- 4 280 416
- US-A- 5 016 547

## Beschreibung

Die vorliegende Erfindung bezieht sich nach dem Oberbegriff des Patentanspruches 1 auf eine Vorrichtung zum Reinigen schadstoffhaltiger Abluft aus Industrieanlagen durch regenerative Nachverbrennung.

Derartige Anlagensysteme sind bereits seit langem und in großer Variationsbreite bekannt, beispielsweise aus der DE-OS 38 11 598 und der DE-OS 38 21 126 der gleichen Anmelderin.

Nachteilig bei diesen bekannten Anlagen ist aber der relativ große bauliche Aufwand für die dort erforderliche Umwälzung der jeweiligen Wärmetauscherschüttungen.

Darüber hinaus sind aber auch schon Regenerativ-Reaktoren bekannt. So offenbart die EP-A3- 0 440 181 einen derartigen Reaktor mit mehreren, in einem eine Umfangswandung aufweisenden Gehäuse untergebrachten Wärmetauscherbereichen, die durch gasdichte, an der Umfangswandung angebrachte Trennwände voneinander getrennt jeweils benachbart angeordnet sind. Die Steuerung der Gasströme erfolgt dort jedoch durch baulich aufwendige, störungsanfällige und wartungsintensive, im Boden jeder der im unteren Gehäusebereich vorgesehenen Anströmkammern eingebaute, ventilgesteuerte Anschlußöffnungen.

Weiterhin ist aus der US-Patentschrift 5 016 547 ein Reaktor zum Reinigen schadstoffhaltiger Abluft aus Industrieanlagen durch regenerative Nachverbrennung bekannt, der einen obenliegenden Brennraum, darunter, im sogenannten mittleren Reaktorbereich angeordnete, durch Trennwände voneinander getrennte, vertikal gerichtete, in der Höhe teilweise mit Wärmetauschermaterial ausgefüllte Kammern, die unten zudem mit einem luftdurchlässigen Boden versehen sind, und eine, den Reaktor unten abschließende, mit Zu- und Abführstutzen sowie einer Spülluftzufuhr ausgestattete Reglereinheit aufweist.

Die drehbaren Regelelemente der Reglereinheit liegen dabei in deren oberen Teil und dichten letzteren durch ihre aufwendige, feinjustierte Einpassung im Reglergehäuse und zu den Luft-Zu- und -Abführstutzen gegen den im unteren Teil der Reglereinheit vorgesehenen Abluftsammelraum luftdicht ab.

Nachteilig ist einerseits die große Bauhöhe der Reglereinheit und andererseits die Führung der eingeblasenen Spülluft.

Die Aufgabe der vorliegenden Erfindung besteht deshalb auch vornehmlich darin, ein vom speziellen Verfahrensablauf her neuartiges Schadluft-Verbrennungssystem vorzuschlagen, das in Verbindung mit einer relativ einfachen sowie aufgrund der baulichen Ausgestaltung vor allem auch funktionssicheren Vorrichtung universell als Groß- oder Kleinanlage einsetzbar ist.

Gelöst wird diese Aufgabe dabei durch die im Patentanspruch 1 kennzeichnungsgemäß angegebenen Vorrichtungsmerkmale. Die Unteransprüche beinhalten hierzu vom Detail her weitere bauliche Einzelheiten sowie vorteilhafte Weiterbildungen des erfinderischen Grundgedankens, der zudem an einem zeichnerischen Ausführungsbeispiel im folgenden noch näher erläutert ist.

Es zeigen hierbei:
- Fig. 1: den Längsschnitt durch eine erfindungsgemäße Vorrichtung nach der Schnittlinie B-B in Fig. 2
und
- Fig. 2: eine Draufsicht zu Fig. 1 gemäß der dortigen Schnittlinie A-A.

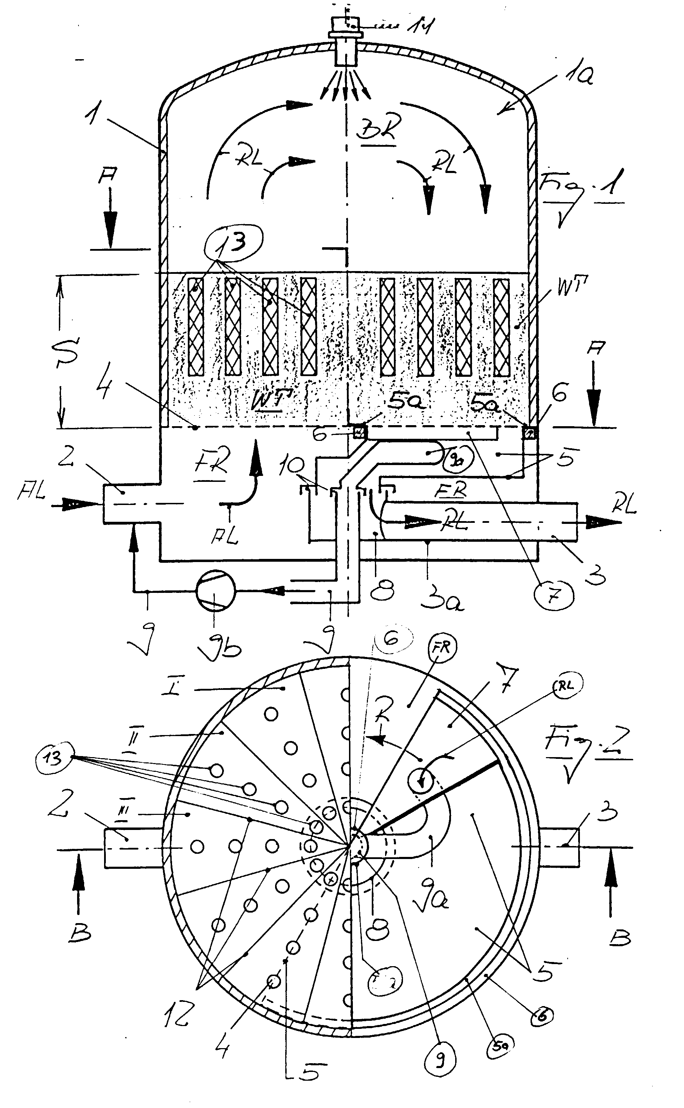

Die dargestellte Vorrichtung besitzt zunächst ein schachtartiges Reaktorgehäuse 1 mit etwa im Mittelbereich des Gehäuseinneren 1a befindlicher tauscherschüttung "WT" vorausbestimmter Schichtstärke "S" und aus einem geeigneten mineralischen Material bestehend, sowie die notwendigen leitungsanschlußstutzen 2 und 3 für die durch beispielsweise Lösungsdämpfe schadstoffhaltige Abluft "AL" und die nach der Verbrennung derselben erzeugte Reinluft "RL". Das grundlegend funktionelle bei diesem Anlagenkonzept besteht nun zunächst einmal darin, daß der freie Raum "FR" unterhalb der Wärmetauscherschüttung "WT" der schadstoffhaltigen Abluftzufuhr "2, AL" sowie dem Reinluftabzug 3, "RL" dient, und der Reaktorgehäusebereich "BR" oberhalb der Schüttung "WT" als Brennkammer ausgebildet ist und zugleich zur Rückleitung der gereinigten Abluft "RL" durch die Wärmetauscherschüttung "WT" zum Reinluftabführstutzen 3 bestimmt ist.

In spezieller baulicher Ausgestaltung ist dabei nun vorgesehen, daß die Wärmetauscherschüttung "WT" auf einem ebenflächigen Rost oder Lochblechboden 4 ruht und sich im darunterliegenden Freiraum "FR" eine kontinuierlich an diesem Boden 4 entlangbewegte, den Querschnitt des Bodens 4 etwa zur Hälfte überdeckende und an ihren Rändern 5a gegenüber dem Boden 4 abgedichtete 6 Sammelkammer 5 befindet, die eine Verbindungsleitung 3a o. dgl. zum Reinluftabführstutzen 3 aufweist.

Damit beim Betrieb einer solchen Anlage auch stets tatsächlich reine, d.h. schadstoffreie Luft "RL" in den Abzugsstutzen 3 gelangt, ist als neu vorgesehen, daß der Reinluftsammelkammer 5 in Bewegungsrichtung "R" gesehen eine Spülluftkammer 7 vorgeschaltet ist, mit Sauggebläse 9b und Spülluft-Rückführleitung 9, 9a zum Ablufteintrittsstutzen 2, und beide Kammern 5 und 7 zusammen etwa die Hälfte des Querschnitts des Rostes bzw. Lochblechbodens 4 überdecken.

Der Querschnitt des zuvor beschriebenen Reaktorgehäuses 1 samt der Einbauten kann dabei rechteckig sein, jedoch ist es von Vorteil, wenn, wie aus den beiden Zeichnungsfiguren ersichtlich, Reaktorgehäuse 1 samt Rost bzw. Lochblechboden 4 einen kreisrunden Querschnitt aufweisen, die Reinluftsammelkammer 5 samt der Spülluftkammer 7 sektorartig ausgebildet sind und beide um eine gemeinsame, zentrale Zwischenkammer 8 in nicht gesondert dargestellter Weise motorisch angetrieben umlaufen.

Die bauliche Ausgestaltung dieser Merkmale kann hierzu derart aussehen, daß die Spülluftrückführleitung 9, 9a der Spülluftkammer 7 aus einem stationären Rohrstück 9 und einem dazu umlaufenden Teil 9a besteht, das einerseits konzentrisch zur zentralen Zwischenkammer 8 liegt und mit dem daran anschließenden Bereich 9a zum Teil durch die kontinuierlich umlaufende Reinluftsammelkammer 5 geführt ist, wobei beispielsweise Labyrinthdichtungen 10 o.ä. Elemente an den Übergängen der feststehenden Teile 8, 9 zu den umlaufenden Teilen 9a, 5 vorgesehen sind.

Vervollständigt wird die gesamte Vorrichtung in baulicher Hinsicht letztlich noch dadurch, daß die Wärmetauscherschüttung "WT" durch vertikal gerichtete Trennwände 12 aus hochhitzebeständigem Material in einzelne Sektoren I, II ... unterteilt ist und daß in die Brennkammer "BR" oberhalb der Wärmetauscherschüttung "WT" mindestens ein Zusatzbrenner 11 mündet und eventuell nicht dargestellte Strömungsumlenkbleche für die Rückleitung der Reinluft "RL" auf die Wärmetauscherschüttung "WT" zu, noch in der Brennkammer "BR" vorgesehen sind.

Anstelle des oder der zuvor erwähnten Zusatzbrenner sind jedoch alternativ auch elektrische Heizelemente 13 innerhalb der Wärmetauscherschüttung "WT" in gleicher Weise denkbar, die ggf. im Inneren der Sektoren-Trennwände 12 angeordnet sein können.

Mit der zuvor anhand der zeichnerischen Darstellungen beschriebenen Vorrichtung ist somit ein Abgasreinigungsverfahren durchführbar, dessen übergeordnete Lehre gekennzeichnet ist durch Verwendung einer bis zum Zündpunkt der in der Abluft "AL" enthaltenen Schadstoffe aufgeheizten Wärmetauscherschüttung "WT" in vorbestimmter Schichtdicke "S" sowie aus einem geeigneten, vorzugsweise mineralischen Material bestehend, die in jeweils wechselnder Richtung und in regelmäßigen Zyklen einerseits von der schadstoffhaltigen Abluft "AL" und im Gegenzug von der durch die Verbrennung der Schadstoffe in der Schüttung "WT" erzeugten, heißen Reinluft "RL" durchströmt wird, wobei letztere "RL" die Wärmetauscherschüttung "WT" wiederum aufheizt und dabei selbst abkühlt sowie gesammelt und z.B. durch einen Kamin o.ä. direkt ins Freie abgeleitet wird.

Bevor jedoch diese Abluftreinigung vonstatten gehen kann, muß die Wärmetauscherschüttung "WT" auf ca. 650-850°C aufgeheizt werden, was über den Zusatzbrenner 11 geschieht; die hierbei anfallenden Abgase werden logischerweise dabei über die rotierende Reinluftsammelkammer 5 abgeleitet, wobei sie die Wärmetauscherschüttung "WT" durchströmen und über den gesamten Querschnitt erwärmen. Diese Aufheizung kann in gleicher Weise auch erreicht werden durch elektrische Heizelemente innerhalb der Wärmetauscherschüttung "WT", wobei diese Elemente beispielsweise im Inneren der Sektor-Trennwände 12 angeordnet sein können. Ist die zuvor angegebene Temperatur der Schüttung "WT" erreicht, beginnt der Abluftreinigungsbetrieb, wobei die schadstoffhaltige Abluft in den Freiraum "FR" unterhalb der Schüttung "WT" eingeblasen wird und den von den rotierenden Segmenten 5 und 7 nicht überdeckten Bereich der Schüttung "WT" durchströmt; dabei wird sie bis zur Zündtemperatur der in der Abluft "AL" enthaltenen Schadstoffe vorgewärmt, wobei letztere dann verbrennen.

Hierdurch wiederum steigt die Temperatur an und sollte etwa 650 - 850°C erreichen. Ist die Schadstoffbeladung in der Abluft "AL" hierfür nicht ausreichend, muß über den Zusatzbrenner 11 die fehlende Energie zugeführt werden. Im übrigen sind Schichtstärke "S" der Wärmetauscherschüttung "WT" sowie Größe und damit Verweilzeit in der Brennkammer "BR" samt Reaktionstemperatur derart ausgelegt, daß eine vollständige Oxidation der Schadstoffe aus der Abluft "AL" gewährleistet ist.
Die heißen Verbrennungsgase aus dem Brennraum "BR" durchströmen danach in umgekehrter Richtung jeweils wieder denjenigen Teil der Wärmetauscherschüttung "WT" der sich gerade oberhalb der umlaufenden Segmente von Spülluftkammer 7 und Reinluftsammelkammer 5 befindet; hierbei erwärmt sich das Material der Schüttung und das Reingas kühlt entsprechend ab. Die Wärmetauscherschüttung "WT" hat somit eine Doppelfunktion, nämlich in regelmäßigen Zyklen entsprechend der Drehzahl des Rotors 5, 7 die gespeicherte Wärme an die ankommende, schadstoffhaltige Abluft "AL" abzugeben und die in den heißen Verbrennungsgasen "RL" enthaltene Wärmemenge für den nachfolgenden Zyklus wieder aufzunehmen. Es ist die Höhe "S" der Wärmetauscherschüttung "WT" also auch derart zu wählen, daß die Temperaturdifferenz zwischen Ablufteintritt "AL" und Reingasaustritt "RL" so gering wie möglich gehalten werden kann.

Letztlich muß das gesamte System derart optimiert werden, daß der durch die Schüttungshöhe "S" bedingte Strömungswiderstand und die dadurch erforderliche Ventilatorleistung in einem wirtschaftlichen Verhältnis zur zurückgewonnenen Energie steht. Das gesamte zuvor beschriebene System ist zudem so aufgebaut, daß es auch in umgekehrtem Strömungsverlauf von Abluft und Reinluft betrieben werden kann.

### Bezugsziffernverzeichnis

- 1: Reaktorgehäuse
- 1a: Innenraum
- 2: Abluftzuführstutzen
- 3: Reinluftabführstutzen
- 3a: Verbindungsleitung
- 4: ebener Rost bzw. Lochblechboden
- 5: Reinluftsammelkammer
- 5a: Dichtrand
- 6: Dichtung
- 7: Spülluftkammer
- 8: zentrale Zwischenkammer
- 9: Reinluft-Rückführleitung zu Pos. 2
- 9a: umlaufender Bereich von Pos. 9
- 9b: Sauggebläse
- 10: Labyrinthdichtung
- 11: Zusatzbrenner
- 12: Trennwand

- AL: schadstoffhaltige Abluft
- RL: Reinluft
- BR: Brennraum
- FR: unterer Freiraum
- R: Umlaufrichtung von Pos. 5 und 7
- WT: Wärmetauscherschüttung
- S: Schichthöhe der Schüttung
- I, II: Sektoren der Schüttung

## Patentansprüche

1. Vorrichtung zum Reinigen schadstoffhaltiger Abluft aus Industrieanlagen durch regenerative Nachverbrennung, unter Verwendung eines schachtartigen Reaktorgehäuses (1) mit einer im Inneren (la) des Reaktorgehäuses (1) in Sektoren (I, II ...) befindlichen und diese in der Höhe (S) teilweise ausfüllenden Wärmetauscherschüttung (WT), die auf einem als ebenflächigen Rost oder Lochblechboden bezeichneten Boden (4) ruht, mit einem am unteren Teil des Reaktorgehäuses (1) sitzenden Abluftzuführ- (2) und Reinluftabführstutzen (3), mit einem freien Raum (FR) unterhalb der Wärmetauscherschüttung (WT) zur schadstoffhaltigen Abluftzufuhr (2, AL) und zum Reinluftabzug (3, RL), mit einem freien Raum oberhalb der Wärmetauscherschüttung (WT), der als Brennkammer (BR) ausgebildet ist und der zugleich zur Rückleitung der gereinigten Abluft (RL) durch die Wärmetauscherschüttung (WT) zum Reinluftabführstutzen (3) bestimmt ist,
**dadurch gekennzeichnet**,
daß sich im unter dem Boden (4) angeordneten Freiraum (FR) eine kontinuierlich an diesem Boden (4) entlangbewegte und an ihren Rändern (5a) gegenüber dem Boden (4) abgedichtete (6), eine rotierende Umlaufbewegung (R) ausführende Reinluftsammelkammer (5) befindet, die eine Verbindungsleitung (3a) zum Reinluftabführstutzen (3) aufweist, und daß der Reinluftsammelkammer (5) in Richtung ihrer Umlaufbewegung (R) eine Spülluftkammer (7) vorgeschaltet ist, die mittels einem Sauggebläse (9b) über eine Spülluftleitung (9, 9a) die als Spülluft verwendete Reinluft (RL) zum Ablufteintrittsstutzen (2) rückführt, und die Reinluftsammelkammer (5) und die Spülluftkammer (7) zusammen etwa die Hälfte des Querschnitts des Bodens (4) überdecken.

2. Vorrichtung nach Anspruch 1,
**dadurch gekennzeichnet,**
daß das Reaktorgehäuse (1) samt Rost bzw. Lochblechboden (4) einen kreisrunden Querschnitt aufweist,
die Reinluftsammelkammer (5) samt der Spülluftkammer (7) sektorartig ausgebildet ist
und beide um eine gemeinsame, zentrale Zwischenkammer (8) umlaufen, und
daß die Reinluftrückführleitung (9, 9a) der Spülluftkammer (7) aus einem stationären (9) und einem umlaufenden Teil (9a) besteht und zum Teil konzentrisch innerhalb der zentralen Zwischenkammer (8) liegt und mit dem daran anschließenden Bereich (9a) zum Teil durch die kontinuierlich umlaufende Reinluftsammelkammer (5) geführt ist.

3. Vorrichtung nach den Ansprüchen 1 und 2,
**dadurch gekennzeichnet,**
daß in die Brennkammer (BR) oberhalb der tauscherschüttung (WT) mindestens ein Zusatzbrenner (11) mündet und darin eventuell Strömungsumlenkbleche für die Rückleitung der Reinluft (RL) auf die tauscherschüttung (WT) zu vorgesehen sind.

4. Vorrichtung nach einem oder mehreren der vorhergehenden Ansprüche,
**gekennzeichnet durch**
elektrische Heizelemente innerhalb der tauscherschüttung (WT), die ggf. im Inneren der Sektor-Trennwände (12) angeordnet sind.

## Claims

1. Device for the cleaning of exhaust air, which contains noxious substance, from industrial plants by regenerative after-burning, with use of a shaft-like reactor housing (1) with a heat exchange filling (WT), which is disposed in the interior (1a) of the reactor housing (1) in sectors (I, II ...), partly fills up this in height (S) and rests on a base (4) denoted as a planar grating or perforated baseplate, with an exhaust feed stub pipe (2) and a clean air discharge stub pipe (3) seated at the lower part of the reactor housing (1), with a free space (FR) below the heat exchange filling (WT) for the feed (2, AL) of exhaust air containing noxious substance and for the discharge (3, RL) of clean air, with a free space which is above the heat exchange filling (WT), is formed as a combustion chamber (BR) and is intended at the same time for the return conduction of the cleaned exhaust air (RL) through the heat exchange filling (WT) to the clean air discharge stub pipe (3), characterised thereby that a clean air collecting chamber (5) is disposed in the free space (FR) arranged under the base (4), is continuously moved along at this base, is sealed (6) at its edges (5a) relative to the base (4), executes a rotating circulatory movement (R) and has a connecting duct (3a) for the clean air discharge stub pipe (3), and that connected upstream of the clean air collecting chamber (5) in the direction of its circulatory movement (R) is a flushing air chamber (7) which returns the clean air (RL) used as flushing air to the exhaust air entry stub pipe (2) by means of a suction blower (9b) by way of a flushing air duct (, 9a), and the clean air collecting chamber (5) and the flushing air chamber (7) together cover approximately half the cross-section of the base (4).

2. Device according to claim 1, characterised thereby that the reactor housing (1) inclusive of grating or perforated base plate (4) has a circularly round cross-section, the clean air collecting chamber (5) inclusive of the flushing air chamber (7) is constructed to be sector-shaped, and both extend around a common central intermediate chamber (8), and that the clean air return feed duct (9, 9a) of the flushing air chamber (7) consists of a stationary part (9) and a circulating part (a) and in part lies concentrically within the central intermediate chamber (8) and is led together with the region (9a) connected thereto in part through the continuously circulating clean air collecting chamber (5).

3. Device according to claims 1 and 2, characterised thereby that at least one supplementary burner (11) opens into the combustion chamber (BR) above the heat exchange filling (WT) and flow deflecting plates for the return conduction of the clean air (RL) onto the heat exchange fillter (WT) are possibly to be provided therein.

4. Device according to one or more of the preceding claims, characterised by electric heating elements within the heat exchange filling (WT), which in a given case are arranged in the interior of the sector separating walls (12).

## Revendications

1. Dispositif d'épuration d'air d'échappement contenant des substances nocives, issues d'installations industrielles, par post-combustion régénératrice, avec utilisation d'un carter de réacteur (1) en forme de puits, avec une masse de remplissage en vrac pour échange thermique (WT) se trouvant dans la partie intérieure (1A) du carter de réacteur (1), répartie en secteurs (I, II . ..) et remplissant partiellement ces secteurs dans le sens de la hauteur (S), masse de remplissage reposant sur un fond (4) réalisé sous forme de grille à surface plane ou de fond en tôle perforée, avec une tubulure d'amenée d'air d'échappement (2) et une tubulure d'évacuation d'air pur (3) montée sur la partie inférieure du carter de réacteur (1), avec un espace libre (FR) placé au-dessous de la masse de remplissage en vrac à échange thermique (WT), pour l'amenée d'air d'échappement (2a, AL) contenant des substances nocives, et pour l'extraction de l'air pur (3, RL), avec un espace libre au-dessus de la masse de remplissage en vrac à échange thermique (WT), réalisé sous forme de chambre de combustion (BR) et conçu simultanément pour la recirculation de l'air d'échappement (RL) épuré, à travers la masse de remplissage en vrac à échange thermique (WT), en direction de la tubulure d'évacuation d'air pur (3), caractérisé en ce que, dans l'espace libre (FR) disposé sous le fond (4), se trouve une chambre collectrice d'air pur (5), déplacée de façon continue le long de ce fond (4) et isolée de façon étanche (6) sur ses bords (5a) par rapport au fond (4), chambre effectuant un mouvement de circulation (R) rotatif, présentant une conduite de liaison (3a) vers la tubulure d'évacuation d'air pur (3) et en ce que, en amont de la chambre collectrice d'air pur (S), dans la direction de son déplacement de circulation (R), est mis en circuit une chambre d'air de rinçage (7) retournant, au moyen d'une soufflante d'aspiration (9b), par l'intermédiaire d'une conduite d'air de rinçage (9, 9a), l'air pur (RL) utilisé comme air de rinçage vers la tubulure d'entrée d'air d'échappement (2), et la chambre collectrice d'air pur (5) et la chambre d'air de rinçage (7) couvrant conjointement la moitié de la section transversale du fond (4).

2. Dispositif selon la revendication 1, caractérisé en ce que le carter de réacteur (1) avec la grille ou le fond à tôle perforée (4) a une section transversale circulaire ronde,
la chambre collectrice d'air pur (5) avec la chambre d'air de rinçage (7) est réalisée en secteurs et les deux tournant autour d'une chambre intermédiaire (8) centrale commune, et en ce que la conduite de recyclage d'air pur (9, 9a) de la chambre d'air de rinçage (7) est constituée d'une partie stationnaire (9) et d'une partie circulante (9a) et se trouve en partie concentriquement à l'intérieur de la chambre intermédiaire (8) centrale et est guidée avec la zone (9a) y faisant suite en partie à travers la chambre collectrice d'air pur (5) tournant de façon continue.

3. Dispositif selon les revendications 1 et 2, caractérisé en ce que dans la chambre de combustion (BR) débouche, au-dessus de la masse de produit en vrac à échange de chaleur (WT), au moins un brûleur additionnel (11) et des tôles de déviation d'écoulement, s'y trouvant éventuellement, sont prévus pour assurer la recirculation de l'air pur (RL) sur la masse de produit en vrac à échange thermique (WT).

4. Dispositif selon une ou plusieurs des revendications précédentes, caractérisé par des éléments chauffants électriques prévus à l'intérieur de la masse de produit en vrac à échange thermique (WT), disposés le cas échéant à l'intérieur des parois de séparation intersecteur (12).
